Europäisches Patentamt

European Patent Office

Office européen des brevets

(11) Publication number: **0 129 743**
**B1**

# EUROPEAN PATENT SPECIFICATION

(45) Date of publication of patent specification: **12.04.89**

(51) Int. Cl.⁴: **B 65 B 51/14**

(21) Application number: **84106338.1**

(22) Date of filing: **04.06.84**

(54) **Device for sealing together two overlapping edges of a heat sealable packaging sheet wrapped around a prismatic article.**

(30) Priority: **23.06.83 IT 347683**

(43) Date of publication of application:
**02.01.85 Bulletin 85/01**

(45) Publication of the grant of the patent:
**12.04.89 Bulletin 89/15**

(84) Designated Contracting States:
**BE CH DE FR GB LI SE**

(56) References cited:
**US-A-3 729 894**

(73) Proprietor: **S.P.R. S.r.L.**
**Via dell'Arcoveggio 80/5**
**I-40129 Bologna (IT)**

(72) Inventor: **Zagnoni, Giovanni**
**Via Mezzaluna 14**
**I-40010 Calcara Di Crespellano Bologna (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

This invention relates to a device for sealing together two overlapping edges of a heat sealable packaging sheet wrapped into a tubing around a prismatic article, in particular a box container.

It is known that for packaging some products as pills, medicines, etc., prismatic-shape containers are utilised which are wrapped in clear sheet material, usually cellophane.

The sheet is applied, through suitable locators, around a container so as to assume a tube-like shape with an axis across the container direction of advance and with two overlapping edges which are then sealed together. Sealing of the edges is carried out by means of reciprocating sealers which, on account of their large mass, pose quite appreciable operating limitations.

Accordingly the object of this invention is to eliminate the above drawbacks of conventional apparatus by providing a device which can seal articles continuously as they are advanced.

It is a further object of the invention to provide such a device which is highly reliable in operation and versatile in application to accommodate different article sizes.

According to the invention the above objects are achieved by a device for sealing together two overlapping edges of a heat sealable packaging sheet wrapped into a tube around a prismatic article, particularly around a box container, it comprising an endless flexible member having a portion moving along the article path in the same direction and substantially at the same speed as the articles, said flexible member carrying at intervals sealer elements pivotally about an axis transverse to the direction of advance of the articles, and cam means for controlling the pivotal movement of said sealer elements from a position in which the overlapping edges of said packaging sheet are held against the articles and sealed together, to a position away from the articles.

Further features of the invention will be more apparent from the following description of one embodiment thereof, as illustrated by way of example only in the accompanying drawings, where:

Figure 1 is a partly diagrammatic side view of this device;

Figure 2 is a plan view of the device of Figure 1; and

Figure 3 is a sectional view taken along the line III—III of Figure 1.

Making reference to the drawings, the numeral 1 designates the surface of a bed for this device, from which two plane-parallel shoulders 2, 3 extend vertically upwards which are interconnected by cross elements 4, 5. Carried rotatably in the shoulders 2, 3 through a pair of rolling bearings 6, 7, is a shaft 8 which extends horizontally cantilever-like from the shoulder 2. To the portion of the shaft 8 which is included between the shoulders 2, 3, there is keyed a sprocket wheel 9 which is connected, via a drive chain, to the device prime mover. Mounted in the shoulders 2, 3, alongside the shaft 8 and at the same height, is an additional stationary shaft 10, parallel to the shaft 8. A prismatic block 11 is attached rigidly to the end of the shaft 10 and has, on its top and bottom faces, two grooves 12, 13 which have a pair of strips 14, 15 part inserted therein and secured by screw fasteners.

The strips 14, 15 project beyond one side of the block 11 and engage in grooves 16, 17 of a further block 18 which accommodates a rolling bearing 19 therein for rotatably supporting the shaft 8.

The appropriate spacing of the blocks 11 and 18 is controlled by an adjustment screw 20, and respectively locknut, interposed therebetween.

Rotatively rigid with the portion of the shaft 8 which extends outwardly from the shoulder 2, are a pair of sprocket wheels 21, 22 around which are trained respective closed-loop chains 23, 24 passed on shoes 25, 26 attached to the shaft 10.

The shoes 25, 26 have a contour which includes a circular section having the same radius as the sprocket wheels 21, 22 and two horizontal sections along which the chains 23, 24 are caused to slide.

Attached to the chains 23, 24 are brackets 27, 28 which are juxtaposed in pairs at equal distances apart. Each pair of brackets 27, 28 carries pivotally one sealer element 29 comprising a cross bar 30 onto which a sealing fin 31 is positioned. The cross bar 30 has its opposed ends secured to brackets 32, 33 having pins 34, 35 which are aligned to and set rotatably in the brackets 27, 28.

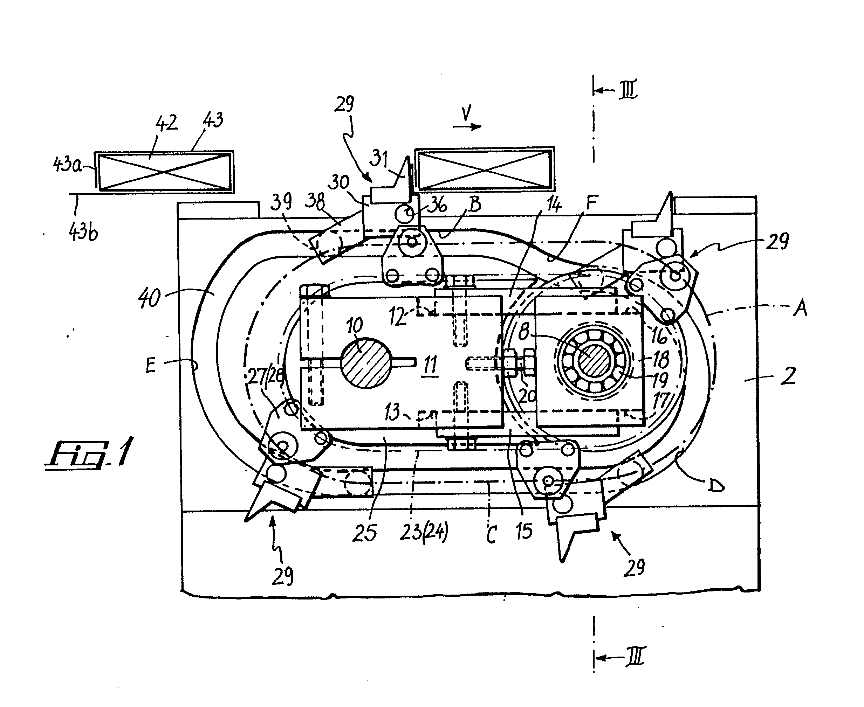

The path followed by the articulation points represented by said pins 34, 35 extends outward of the chains 23, 24 and is indicated at A in Figure 1. The bars 30 have a longitudinal bore 36 formed therein for accommodating a resistance heater the electric circuitry wherefor is described herein below.

Each bar 30, moreover, has an arm 37 made rigid thereto which extends toward the shoulder 2 and is terminated with a lever 38 carrying a roller 39.

The roller 39 is in constant engagement with a loop groove 40 formed in a plate 41 attached to the shoulder 2. The groove 40 has a diversified pattern: it comprises two rectilinear sections B and C which are aligned to straight portions of the path A followed by the pins 34, 35 and connected together by two arcuate sections D and E, and one inflexed section F. The sections D have a decreasing radius in the direction of advance of the sealer elements 29, which direction is indicated at V in Figure 1. In particular, the sections D and E have a smaller and larger radius, respectively, than the arcs followed by the pins 34, 35, while the inflexed portion F connects the rectilinear section B to the arcuate section D.

The device described in the foregoing operates as follows. Articles, in this instance prismatic boxes 42, are conveyed in the direction V by a conveyor, not shown, which moves at the same speed as the sealers 29.

Wrapped around the boxes 42, tube-like fashion, is a packaging sheet 43 one edge 43a whereof has been previously folded to adhere closely against the rear face of the box, whereas the other edge 43b would be laid on the plane of the box bottom face. The inventive device is timed to the conveyor such that, as the boxes are being advanced, each sealer element is enabled to work on a respective box to first lift and fold the edge 43b over the edge 43a, and then unite together, by application of a suitable pressure, the edges 43a, 43b, of the heat sealable sheet 43.

To this aim, each sealer element 29 entrained by the chains 23, 24, undergoes, in travelling past the section E and on account of the decreasing radius pattern of that section, an acceleration which causes the sealing fin 31 to reach in advance the upright position perpendicular to the section B and complete folding of the edge 43b while contacting the overlapping edges 43a, 43b.

On completion of this step, along the rectilinear path section B, the fin 31 is held close against the rear face of the box and causes complete sealing of the two overlapping edges 43a, 43b. Upon the roller 39 engaging with the inflexed section F, the fin 31 is practically decelerated and subjected to a slight backward tilting movement which allows the article being entrained by the conveyor to separate. The above steps are repeated at each oncoming box.

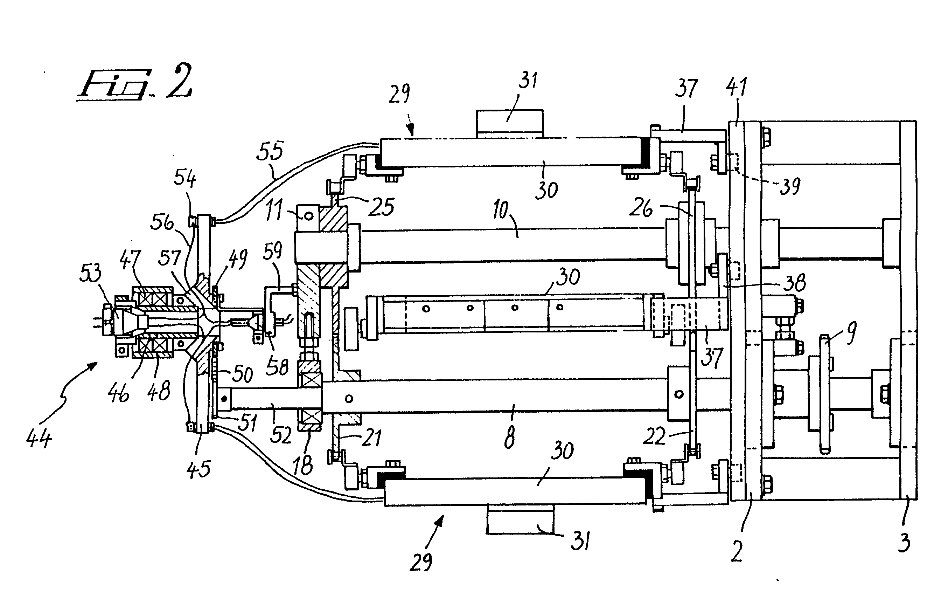

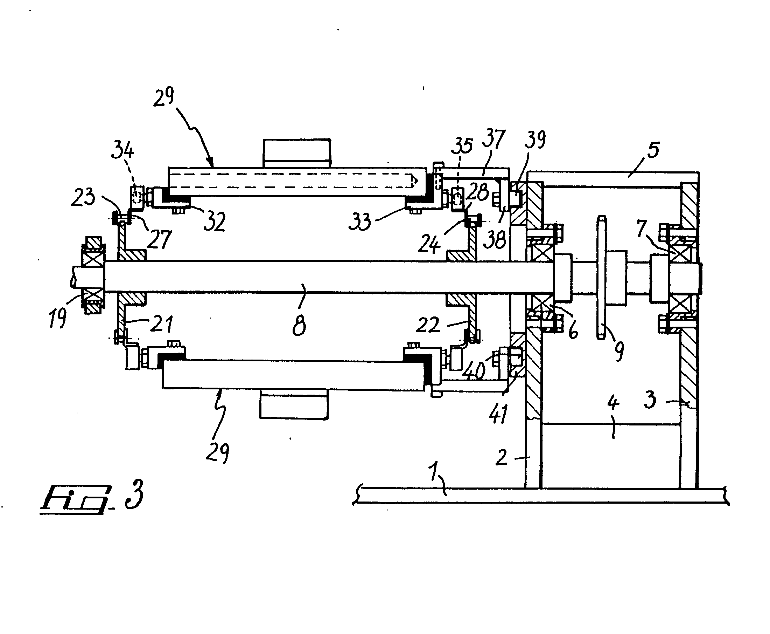

The sealer elements 29 are connected electrically to the mains via a rotary distributor, generally indicated at 44 in Figures 2 and 3.

This distributor comprises a disk 45 which is flange connected to a center tube 46, in turn carried rotatably, with the interposition of rolling bearings 47, at the top of a column 48 which extends from the bed 1 upwardly.

The disk is driven rotatively by means of a drive which includes a sprocket wheel 49 keyed thereto and engaging with a chain 50 trained around a pinion sprocket 51 keyed to an extension 52 of the shaft 8.

The drive ratio of the pinion sprocket 51 to the sprocket wheel 49 is selected such that for each revolution of the disc 45 there occurs one complete revolution of the chains 23, 24.

Inserted into the tube 46 is the rotating portion of a connector 53 of the sliding contact type, the stationary portion whereof is made rigid with the column 48 for connection to the mains. Further details of this connector are omitted herein because it is a commercially available component. Peripherally arranged at intervals around the disk 45 are terminals 54 equal in number to the sealers, to which respective leads 55 are connected which are connected to the sealers 29. The diameter of the disk 45 is selected such that the leads 55 can follow a circular path outside of the blocks 11, 18 and not interfere with the latter, while accommodating the ellipsoidal pattern of the sealers 29 path.

The sealers are connected serially together and to the connector 53 through additional leads 56 which are led through openings 57 in the disk and through the tube 46.

Expediently, thermal detectors would be provided to detect the sealer temperature and control turning on and off of the power supply so as to keep that temperature at a constant preset level.

The thermal detectors are of a type commonly available on the market and are accommodated in seats formed in the sealers, and then connected to a second rotary connector 58 coaxial with the disk 45. The rotating portion of the connector 58 is made rigid with the disk 45 by means of an arm 59, whereas the stationary portion is supported on an arm 60 attached to the block 11.

The detectors are connected, through the connector 58, to control members which control the power supply to the sealers in accordance with the instantaneous temperature thereof.

A basic feature of the invention is that the article wrapper is sealed continuously and, therefore, at a high operational rate.

In fact, the inertial masses which are subjected in operation to reciprocating movements or oscillations, such as the sealer elements, are concentrated around the respective rotation axes and originate no appreciable kickbacks.

Advantageously, the chains 23, 24 entraining the sealer elements are driven in sliding contact with the shoes 25, 26, thus ensuring quiet running of the device.

In practicing the invention, many modifications and changes may be introduced without departing from the true scope thereof, as pointed out in the appended claims.

## Claims

1. A device for sealing together two overlapping edges (43a, 43b) of a heat sealable packaging sheet (43) wrapped into a tube around a prismatic article (42) particularly around a box container, comprising an endless flexible member (23, 24) having a portion moving along the article path in the same direction and substantially at the same speed as the articles, said flexible member carrying at intervals sealer elements (29) pivotally about an axis transverse to the direction of advance of the articles, and cam means (40) for controlling the pivotal movement of said sealer elements (29) from a position in which the overlapping edges of said packaging sheet are held against said articles and sealed together, to a position away from the articles.

2. A device according to Claim 1, characterised in that said flexible member comprises a pair of chains (23, 24) engaging, on the one hand, with a pair of sprocket wheels (21, 22) keyed to a drive shaft (8), and on the other hand, slidably with shoes (25, 26) having a contour which includes a circular section having the same radius as said sprocket wheels and two horizontal sections wherealong said chains are caused to slide.

3. A device according to Claim 2, characterised in that said sprocket wheels (21, 22) and shoes (25, 26), wherearound said chains (23, 24) are entrained, are carried on a pair of shafts (8, 10) projecting cantilever-like from one supporting shoulder (2).

4. A device according to Claim 3, characterised in that brackets (27, 28) are attached to said chains (23, 24) for pivotally supporting said sealer elements (29), said elements having at one end a roller (39) offset from the rotational axis thereof in engaging relationship with a groove (40) consisting of two rectilinear sections (B, C) interconnected by two arcuate sections (D, E) of increasing and decreasing radius, respectively, with respect to the radius of the arcs followed by the pivotal axes of said sealer elements.

5. A device according to Claim 4, characterised in that the electric connection of said sealer elements to the power supply is accomplished through a rotary distributor comprising a disk (45) having the rotational axis thereof parallel to the rotational axes of said sprocket wheels (21, 22) and on the periphery whereof there are assembled connection terminals (54) for leads connected to said sealers (29) and to a rotary electric connector (53) coaxial with said disk for connection to the power supply.

6. A device according to Claim 5, characterised in that thermal detectors are provided to detect the temperature of said sealers for turning them on and off.

**Patentansprüche**

1. Vorrichtung zum Verschweißen von zwei überlappenden Rändern (43a, 43b) eines heißsiegelbaren Verpackungsbogens (43), der zu einem Rohr um einen prismaförmigen Artikel (42), insbesondere um einen Schachtelbehälter gewickelt ist, gekennzeichnet durch einen endlosen biegsamen Teil (23, 24), der einen Abschnitt aufweist, der sich entlang des Weges des Gegenstandes in derselben Richtung und im wesentlichen mit derselben Geschwindigkeit wie die der Artikel bewegt, während der benannte biegsame Teil in Abständen Schweißelemente (29), die um eine quer zur Bewegungsrichtung der Artikel verlaufenden Achse schwenkbar sind, und Nockenglieder (40) trägt, welche die Schwenkbewegung der Schweißelemente (29) von einer Stellung, in welcher die überlappenden Ränder des Verpackungsbogens gegen die Artikel gehalten und miteinander verschweißt werden, in eine von den Artikeln abgesetzte Stellung steuern.

2. Vorrichtung nach Anspruch 1, dadurch gekennzeichnet, daß der biegsame Teil aus einem Paar von Ketten (23, 24) besteht, die einerseits mit einem Paar von Kettenrädern (21, 22), die auf einer Antriebswelle (8) festgekeilt sind, und andererseits verschiebbar mit Schuhen (25, 26) im Eingriff stehen, welche eine Umrißlinie besitzen, die einen Kreisförmigen Abschnitt von demselben Radius wie der der Kettenräder und zwei horizontale Abschnitte aufweist, entlang welcher die Ketten veranlaßt werden zu gleiten.

3. Vorrichtung nach Anspruch 2, dadurch gekennzeichnet, daß die Kettenräder (21, 22) und Schuhe (25, 26) um welche herum die Ketten (23, 24) geführt werden, von einem Paar von Wellen (8, 10) getragen werden, die auskragend von einer Halteschulter (2) wegstehen.

4. Vorrichtung nach Anspruch 3, dadurch gekennzeichnet, daß an den Ketten (23, 24) Stützen (27, 28) zur schwenkbaren Halterung der Schweißelemente (29) befestigt sind und diese Elemente an einem Ende eine Rolle (39) aufweisen, die von der Rotationsachse desselben abgesetzt sind und welche in eine Rille (40) eingreift, die aus zwei geradlinigen Abschnitten (B, C) besteht, die durch zwei gekrümmte Abschnitte (D, E) mit zunehmendem bzw. abnehmendem Radius in Bezug auf den Radius der Bögen, dem die Schwenkachsen der Schweißelemente folgen, miteinander verbunden sind.

5. Vorrichtung nach Anspruch 4, dadurch gekennzeichnet, daß die elektrische Verbindung der Schweißelemente mit der Stromzufuhr über einen Drehverteiler erfolgt, der aus einer Scheibe (45) besteht, deren Rotationsachse parallel zur Rotationsachse der Kettenräder (21, 22) verläuft und an deren Peripherie Verbindungsanschlüsse (54) für Leitungen angebracht sind, die mit den Schweißelementen (29) und einem drehbaren, mit der Stromquelle verbundenen, koaxial zur Scheibe gelegenen Verbindungsteil (53) verbunden sind.

6. Vorrichtung nach Anspruch 5, dadurch gekennzeichnet, daß Wärmefühler vorgesehen sind, um die Temperatur der Schweißelemente zu ermitteln, um diese an- und abzuschalten.

**Revendications**

1. Dispositif pour souder l'un à l'autre deux bords en recouvrement (43a, 43b) d'une feuille d'emballage thermo-soudable (43) conformée en un tube autour d'un article prismatique (42), en particulier d'un conteneur en forme de boîte, comprenant un organe flexible sans fin (23, 24) possédant une portion mobile le long du trajet de l'article dans la même direction et sensiblement à la même vitesse que les articles, ledit organe flexible portant à intervalle des éléments de scellement (29) pivotant autour d'un axe transversal par rapport à la direction d'avance des articles et des moyens à came (40) pour commander le mouvement de pivotement desdits éléments de scellement (29) depuis une position dans laquelle les bords en recouvrement de ladite feuille d'emballage sont maintenus au contact desdits articles et soudés l'un à l'autre jusqu'à une position à l'écart des articles.

2. Dispositif selon la revendication 1, caractérisé par le fait que ledit organe flexible comprend une paire de chaînes (23, 24) en prise d'une part avec une paire de pignons (21, 22) clavétes sur un arbre d'entraînement (8), et d'autre part de manière coulissante avec des sabots (25, 26) possédant un contour qui comporte une section circulaire ayant le même rayon que lesdits pignons et deux sections horizontales le long desquelles lesdites chaînes sont amenées à coulisser.

3. Dispositif selon la revendication 2, caractérisé par le fait que lesdits pignons (21, 22) et lesdits sabots (25, 26) autour desquels lesdites chaînes (23, 24) sont entraînées, sont portés sur une paire d'arbres (8, 10) en saillie en porte-à-faux d'un épaulement de support (2).

4. Dispositif selon la revendication 3, caractérisé par le fait que des supports (27, 28) sont fixés auxdites chaînes (23, 24) pour supporter à pivotement lesdits éléments de scellement (29), lesdits éléments possédant à une extrêmité un galet (39), décalé par rapport à leur axe de rotation, en relation d'engagement avec une gorge (40) constituée de deux sections rectilignes (B, C) reliées par deux sections courbes (D, E) de rayon croissant et respectivement décroissant par rapport au rayon des arcs suivis par les axes de pivotement desdits éléments de scellement.

5. Dispositif selon la revendication 4, caractérisé par le fait que la liaison électrique desdits éléments de scellement à l'alimentation en courant est réalisée par un distributeur rotatif comprenant un disque (45) dont l'axe de rotation est parallèle aux axes de rotation desdits pignons (21, 22) et à la périphérie duquel sont prévues des bornes de raccordement (54) pour des conducteurs reliés auxdits éléments de scellement (29) et à un connecteur électrique tournant (53) coaxial audit disque pour le raccordement à l'alimentation en courant.

6. Dispositif selon la revendication 5, caractérisé par le fait que des capteurs thermiques sont prévus pour détecter la température desdits éléments de scellement pour la mise en marche et l'arrêt de ceux-ci.

_Fig.1_

EP 0 129 743 B1

_Fig. 2_

EP 0 129 743 B1

EP 0 129 743 B1

FIG. 3